(19) Europäisches Patentamt
European Patent Office
Office européen des brevets

(11) **EP 2 481 113 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(51) Int Cl.:
*H01M 4/86* (2006.01)      *H01M 4/92* (2006.01)
*H01M 8/1018* (2016.01)

(21) Anmeldenummer: **10754953.7**

(22) Anmeldetag: **22.09.2010**

(86) Internationale Anmeldenummer:
**PCT/EP2010/063944**

(87) Internationale Veröffentlichungsnummer:
**WO 2011/036165 (31.03.2011 Gazette 2011/13)**

(54) **KATALYSATOR MIT METALLOXIDDOTIERUNGEN FÜR BRENNSTOFFZELLEN**

CATALYST HAVING METAL OXIDE DOPING FOR FUEL CELLS

CATALYSEUR À DOPAGE D'OXYDE MÉTALLIQUE POUR PILES À COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **22.09.2009 EP 09170900**

(43) Veröffentlichungstag der Anmeldung:
**01.08.2012 Patentblatt 2012/31**

(73) Patentinhaber: **BASF SE**
**67056 Ludwigshafen am Rhein (DE)**

(72) Erfinder:
• **QUERNER, Claudia**
**67063 Ludwigshafen (DE)**
• **KOTREL, Stefan**
**Bedminster, NJ 07921 (US)**
• **SCHWAB, Ekkehard**
**67434 Neustadt (DE)**
• **ÜNSAL, Ömer**
**55128 Mainz (DE)**
• **BRÄUNINGER, Sigmar**
**69502 Hemsbach (DE)**

(56) Entgegenhaltungen:
DE-A1-102008 023 781      US-A1- 2006 099 483
US-A1- 2008 254 974      US-A1- 2009 081 528

**Beschreibung**

Die Erfindung betrifft einen Katalysator für Brennstoffzellen, der einen Träger, mindestens ein katalytisch aktives Metall ausgewählt aus der Gruppe bestehend aus Rhodium, Iridium, Nickel, Palladium, Platin, Kupfer, Silber und Gold oder eine Legierung enthaltend mindestens ein Metall ausgewählt aus der Gruppe bestehend aus Rhodium, Iridium, Nickel, Palladium, Platin, Kupfer, Silber und Gold, sowie mindestens ein Oxid ausgewählt aus $TiO_2$ und $ZrO_2$ enthält. Die Erfindung betrifft weiterhin ein Verfahren zur Herstellung eines derartigen Katalysators.

Brennstoffzellen sind elektrochemische Zellen, die sowohl für die mobile als auch für die stationäre Erzeugung von elektrischem Strom entwickelt worden sind. In einer Brennstoffzelle wird dabei das Prinzip der Elektrolyse umgekehrt. Man kennt heute verschiedene Arten von Brennstoffzellen, die sich im Allgemeinen in der Betriebstemperatur voneinander unterscheiden. Der Aufbau der Zellen ist aber prinzipiell bei allen Typen gleich. Sie sind allgemein aus zwei Elektrodenschichten, einer Anode und einer Kathode, an denen die Reaktionen ablaufen, und einem Elektrolyten zwischen den beiden Elektroden in Form einer Membran aufgebaut. Diese Membran hat drei Funktionen, sie stellt den ionischen Kontakt her, verhindert den elektrochemischen Kontakt, und sorgt außerdem für das getrennthalten der den Elektrodenschichten zugeführten Medien. Die Elektrodenschichten werden in der Regel mit Gasen oder Flüssigkeit versorgt, die im Rahmen einer Redoxreaktion umgesetzt werden. Beispielsweise werden die Anode mit Wasserstoff oder Methanol und die Kathode mit Sauerstoff versorgt. Um dies zu gewährleisten, sind die Elektrodenschichten üblicherweise mit elektrisch leitenden Gasverteilerschichten kontaktiert. Dies sind beispielsweise Platten mit einer gitterartigen Oberflächenstruktur aus einem System feiner Kanäle.

Zum Betrieb der Brennstoffzelle werden gasförmige und flüssige Brennstoffe verwendet, die in der Lage sind, Protonen bereitzustellen. Beispiele umfassen Wasserstoff und Methanol, wobei Wasserstoff bevorzugt ist. Der Wasserstoff wird an die Anode der Brennstoffzelle geliefert. Sauerstoff (in Form von Luftsauerstoff) ist das Zellenoxidationsmittel und wird an die Kathode der Zelle geliefert. Üblicherweise sind die Elektroden aus porösen leitenden Materialien ausgebildet, wie Graphitgewebe, graphitisierten Lagen oder Kohlenpapier, um zu ermöglichen, dass der Brennstoff über die Oberfläche der zu der Brennstoffversorgungselektrode weisenden Membran verteilt wird. Jede Elektrode umfasst dabei fein verteilte Katalysatorpartikel (beispielsweise Platinpartikel auf einem Träger), die üblicherweise auf Kohlenstoffpartikeln aufgebracht sind, um eine Ionisierung von Wasserstoff an der Anode und eine Reduktion von Sauerstoff an der Kathode zu unterstützen. Protonen fließen von der Anode durch eine innenleitende Polymermembran an die Kathode, an der sie sich mit Sauerstoff kombinieren, um Wasser zu bilden, das von der Zelle aus getragen wird. Leiterplatten führen die an der Anode gebildeten Elektronen weg.

Ein signifikantes Problem bei Brennstoffzellen des Standes der Technik ist beispielsweise der Verlust an Leitfähigkeit während eines verlängerten Betriebes bzw. der zyklischen Belastung beim normalen Kraftfahrzeugbetrieb. Ein beträchtlicher Teil dieses Leistungsverlustes steht dabei mit der Schädigung des Sauerstoffreduktionselektrodenkatalysators in Verbindung. Diese Schädigung wird wahrscheinlich durch eine Kombination von Mechanismen bewirkt, die die Eigenschaften des ursprünglich hergestellten Katalysators und dessen Trägers ändern.

Um den Leistungsverlust eines Katalysators über die Zeit zu verringern schlägt die US 2006/0257719 A1 vor, als Katalysator titanoxid- und kohlenstoffgetragene Elektroden zu verwenden, auf denen das Platin abgeschieden wird. Die platinierten Titanoxidpartikel werden dabei mit Kohlenstoffpartikeln gemischt, um den Elektrokatalysator zu bilden.

Eine weitere Herausforderung liegt darin, die spezifische Aktivität der Katalysatoren der Brennstoffzellen zu erhöhen, um höhere Wirkungsgrade zu erreichen. Hierzu wird beispielsweise in der US 2005/0112451 A1 vorgeschlagen, Metalloxid-Kohlenstoffmischungen als Trägermaterial zu verwenden. Der Anteil des Kohlenstoffträgers liegt dabei im Bereich von 1 bis 80 Gew.-%, der Anteil des Metalloxids ist größer als 20 Gew.-%.

US 2009/081528 A1 hat einen geträgerten Katalysator für eine Brennstoffzelle zum Gegenstand sowie eine Elektrode und Brennstoffzelle, die denselben verwenden. Der beschriebene Katalysator enthält einen Träger, ein katalytisch aktives Material, zum Beispiel Platin oder eine Platinlegierung und eine Mischung aus zwei Metalloxiden, nämlich Titanoxid, Zirkonoxid oder Zinnoxid und ein Oxid des Wolfram, Molybdän, Vanadium oder Bor. Der Anteil an der Mischung aus den Metalloxiden liegt bei 0,5 bis 40 Gew.-%.

US 2008/254974 A1 offenbart einen Katalysator, der als Träger Titanoxid oder Zirkonoxid und weiterhin ein katalytisch aktives Metall und ein weiteres Metalloxid enthält, wobei das weitere Metalloxid ausgewählt ist aus den Oxiden des Wolfram, Molybdän, Vanadium und Bor. Das zweite Metalloxid liegt in einer Menge von 0,1 bis 20 Gew.-% vor. Jedoch wird gemäß US 2008/254974 A1 Titanoxid oder Zirkonoxid als Träger eingesetzt, so dass dieses einen sehr viel größeren Anteil hat als die gemäß Anspruch 1 beanspruchten 0,01 bis 0,9 Gew.-%.

Aufgabe der vorliegenden Erfindung ist es, einen Katalysator bereitzustellen, der insbesondere für die kathodische Sauerstoffreduktion in Brennstoffzellen geeignet ist und eine verbesserte spezifische Aktivität, sowie eine hohe Langzeitstabilität aufweist. Eine weitere Aufgabe der Erfindung ist es, ein Verfahren zur Herstellung eines derartigen Katalysators bereitzustellen.

Gelöst wird die Aufgabe durch einen Katalysator enthaltend

(A) einen Träger,

(B) mindestens ein katalytisch aktives Metall aus der Platingruppe oder eine Legierung enthaltend mindestens ein Metall der Platingruppe, sowie

(C) mindestens ein Oxid ausgewählt aus $TiO_2$ und $ZrO_2$,

dadurch gekennzeichnet, dass der Anteil des mindestens einen Metalls des mindestens einen Oxids (C), bezogen auf die Summe der Gew.-% der Komponenten (A), (B) und (C) im Bereich von 0,01 bis 0,9 Gew.-% liegt.

Überraschenderweise stellte sich nämlich heraus, dass durch das Einbringen des mindestens einen Metalloxids (C) in sehr geringem Anteil, die spezifische Aktivität des Katalysators bezüglich der Sauerstoffreduktionsreaktion um bis zu 100 % steigern lässt. Vorteilhafterweise besteht dadurch die Möglichkeit, die Menge des mindestens einen katalytisch aktiven Metalls bzw. der mindestens einen katalytisch aktiven Legierung zu verringern, was erhebliche Kosteneinsparungen mit sich bringt, ohne Leistung einzubüßen. Für eine technische und wirtschaftliche Anwendung von Elektrokatalysatoren in Brennstoffzellen ist die Verringerung der Edelmetall-Beladung, insbesondere im Falle von Platin, im Hinblick auf die Kostenreduzierung des Gesamtsystems bei mindestens gleicher Leistung von großer Bedeutung. Der Anteil des mindestens einen Metalls des mindestens einen Oxids (C) liegt allgemein im Bereich von 0,01 bis 0,9 Gew.-%, bevorzugt im Bereich von 0,1 bis 0,65 Gew.-%, besonders bevorzugt im Bereich von 0,2 bis 0,6 Gew.-%. Bei dem mindestens einen Metall handelt es sich um 1 Metall oder eine Mischung aus 2, 3, 4, 5 oder mehreren der genannten Metalle.

Das mindestens eine Metalloxid, mit dem der Erfindungsgemäße Katalysator dotiert ist, ist mindestens ein Oxid ausgewählt aus $TiO_2$ und $ZrO_2$ bzw. ein Mischoxid von $TiO_2$ und $ZrO_2$.

Um eine hinreichend gute katalytische Aktivität zu erzielen, ist es erforderlich, dass der erfindungsgemäße Katalysator eine große spezifische Oberfläche aufweist. Dies wird dadurch erzielt, dass der Katalysator einen Träger enthält, auf dem das mindestens eine katalytisch aktive Metall bzw. die entsprechende Legierung, sowie das mindestens eine Metalloxid abgeschieden sind. Zum Erzielen einer großen Oberfläche ist es bevorzugt, wenn der Träger porös ist. Geeignete Materialien, die als Träger eingesetzt werden können, sind zum Beispiel Kohlenstoff oder Keramiken. Ein weiteres geeignetes Trägermaterial ist zum Beispiel γ-Aluminiumoxid, das gegebenenfalls kohlenstoffbeschichtet ist.

Besonders bevorzugt als Trägermaterial ist Kohlenstoff bzw. mit Nitriden und/oder Carbiden der Metalle W, Mo, Ti und Ta modifizierter Kohlenstoff bzw. imprägnierter Kohlenstoff. Ein Vorteil des Kohlenstoffs als Trägermaterial ist, dass dieser elektrisch leitfähig ist. Wenn der Katalysator als Elektrokatalysator in einer Brennstoffzelle, zum Beispiel als Kathode der Brennstoffzelle eingesetzt wird, ist es erforderlich, dass dieser elektrisch leitfähig ist, um die Funktion der Brennstoffzelle zu gewährleisten. Der als Träger eingesetzte Kohlenstoff liegt gemäß einer bevorzugten Ausführungsform der Erfindung als Aktivkohle, Ruß, Graphit oder als nanostrukturierter Kohlenstoff vor. Als Ruße eignen sich beispielsweise hochoberflächige Ruße wie Vulcan® XC72 und Ketjen Black® EC300 oder Ruße mit niedriger Oberfläche, wie Denka Black®. Wenn der Kohlenstoff als nanostrukturierter Kohlenstoff vorliegt, so werden bevorzugt Kohlenstoff-Nanoröhrchen eingesetzt. Weiterhin bevorzugt sind Träger aus Graphenen.

Der Anteil des mindestens einen Trägers, Komponente (A), kann über weite Bereiche variiert werden und liegt im Bereich von 49,1 bis 89,99 Gew.-%, bevorzugt im Bereich von 69,1 bis 79,99 Gew.-%, bezogen auf die Summe der Gew.-% der Komponenten (A), (B) und (C).

Gemäß der vorliegenden Erfindung ist das mindestens eine katalytisch aktive Metall ausgewählt aus der Platingruppe oder eine Legierung enthaltend ein oder mehrere der Metalle der Platingruppe.

Als Metall der Platingruppe werden erfindungsgemäß Rhodium, Iridium, Nickel, Palladium, Platin, Kupfer, Silber und Gold bezeichnet. Gemäß einer bevorzugten Ausführungsform der Erfindung ist das Metall der Platingruppe Platin oder Palladium.

Gemäß einer weiteren Ausführungsform der Erfindung umfasst der erfindungsgemäße Katalysator eine katalytisch aktive Legierung, die mindestens ein Metall der Platingruppe, sowie gegebenenfalls ein Übergangsmetall enthält. Das Übergangsmetall ist gemäß einer bevorzugten Ausführungsform der Erfindung ausgewählt aus der Gruppe Nickel, Vanadium, Chrom und Kobalt.

Gemäß einer bevorzugten Ausführungsform der Erfindung ist die Legierung, die der Katalysator als Komponente (B) enthält, ausgewählt aus der Gruppe bestehend aus PtNi, PtFe, PtV, PtCr, PtTi, PtCu, PtPd, PtRu, PdNi, PdFe, PdCr, PdTi, PdCu und PdRu.

Eine Legierung im Sinne der Erfindung ist eine homogene, feste Lösung aus mindestens zwei unterschiedlichen Metallen, wobei ein Element als Grundelement und das bzw. die anderen als Legierungselement(e) bezeichnet werden. Das Grundelement ist das Element, das innerhalb der Legierung den größten Massenanteil aufweist. Bei Legierungen, die das gleiche Grundelemente und die gleichen Legierungselemente enthalten, ergeben sich unterschiedliche Phasen durch eine unterschiedliche Zusammensetzung. So unterscheidet sich in den einzelnen Phasen der Anteile der Legierungselemente im Grundelement. Gegebenenfalls ist es sogar möglich, dass in einer Phase der Anteil des Grundelementes kleiner ist als der Anteil mindestens eines Legierungselementes.

Der Anteil des mindestens einen katalytisch aktiven Metalls oder der mindestens einen katalytisch aktiven Legierung, Komponente (B), liegt im Bereich von 10 bis 50 Gew.-%, bevorzugt im Bereich von 20 bis 30 Gew.-%, bezogen auf die Summe der Gew.-% der Komponenten (A), (B) und (C).

Die Angaben der Gewichtsprozente der Komponenten (A), (B) und (C) beziehen sich auf die Summe der Gew.-% der Komponenten (A), (B) und (C) ohne Berücksichtigung von Restfeuchte, falls der Katalysator nicht vollständig, insbesondere unter Vakuum getrocknet wird, bzw. Verunreinigungen.

Bei der Herstellung des erfindungsgemäßen Katalysators wird das mindestens eine katalytisch aktive Metall oder die mindestens eine katalytisch aktive Legierung, sowie das mindestens eine Metalloxid auf den Träger abgeschieden. Dies erfolgt bevorzugt in Lösungen. Hierzu können zum Beispiel Metallverbindungen in einem Lösungsmittel gelöst sein. Das entsprechende Metall oder die Metalle der Legierung können dabei kovalent, ionisch oder komplexiert gebunden sein. Weiterhin ist es auch möglich, dass das Metall reduktiv als Precursor oder alkalisch durch Ausfällen des entsprechenden Hydroxids abgeschieden wird. Weitere Möglichkeiten zur Abscheidung des katalytisch aktiven Metalls sind auch Imprägnierungen mit einer das Metall enthaltenden Lösung, chemical vapor deposition (CVD)- oder physical vapor deposition (PVD)-Verfahren sowie alle weiteren, dem Fachmann bekannten Verfahren, mit denen ein Metall abgeschieden werden kann. Bevorzugt wird zunächst ein Salz des mindestens einen katalytisch aktiven Metalls gefällt und daraufhin bzw. gleichzeitig das mindestens eine Metalloxid auf dem Träger abgeschieden. Daran anschließend erfolgt eine Trocknung und gegebenenfalls eine Temperaturbehandlung zur Herstellung des Katalysators, der das mindestens eine katalytisch aktive Metall bzw. die mindestens eine katalytisch aktive Legierung sowie das mindestens eine Oxid enthält.

Somit wird im Rahmen der Erfindung ein Verfahren zur Herstellung eines Katalysators, wie vorstehend definiert, zur Verfügung gestellt, umfassend die Schritte

(a) Abscheidung des mindestens einem katalytisch aktiven Metalls aus der Platingruppe auf dem Träger, und

(b) Abscheidung der mindestens einen hydrolysierbaren Vorläuferverbindung des mindestens einen Metalloxides auf dem Träger, und

(c) Gegebenenfalls Durchführung einer Temperaturbehandlung.

Die Verfahrensschritte (a) und (b) können nacheinander oder parallel erfolgen, wobei Verfahrensschritt (b) auch vor Verfahrensschritt (a) durchgeführt werden kann. Allgemein kann man zunächst das katalytisch aktive Metall auf dem Träger abscheiden und danach die Oxid-Dotierung aufbringen. Ebenfalls kann man gemäß einer bevorzugten Ausführungsform der Erfindung die Oxid-Fällung und das Aufbringen des katalytisch aktiven Metalls gleichzeitig durchführen. Gemäß einer weiteren Ausführungsform der Erfindung wird zuerst die mindestens eine hydrolysierbare Vorläuferverbindung auf den Träger abgeschieden und danach das mindestens eine katalytisch aktiven Metalls aus der Platingruppe auf den Träger abgeschieden.

Gemäß einer bevorzugten Ausführungsform der Erfindung wird nach Verfahrensschritt (a) der Träger, der das mindestens eine katalytisch aktive Metall enthält mit mindestens einem Übergangsmetall und/oder einem weiteren katalytisch aktiven Metall vermengt und in einem anschließenden Verfahrensschritt (b) die mindestens eine hydrolysierbare Vorläuferverbindung des mindestens einen Metalloxides abgeschieden, bevor die Temperaturbehandlung in Schritt (c) durchgeführt wird.

Gemäß einer weiteren bevorzugten Ausführungsform der Erfindung wird nach Verfahrensschritt (a) der Träger, der das mindestens eine katalytisch aktive Metall enthält mit mindestens einem Übergangsmetall und/oder einem weiteren katalytisch aktiven Metall vermengt. Anschließend wird die Temperaturbehandlung, Verfahrensschritt (c) durchgeführt und dann in Verfahrensschritt (b) die mindestens eine hydrolysierbare Vorläuferverbindung des mindestens einen Metalloxides abgeschieden.

Gemäß noch einer weiteren bevorzugten Ausführungsform der Erfindung wird in Verfahrensschritt (b) die mindestens eine hydrolysierbare Vorläuferverbindung auf den Träger abgeschieden, anschließend in Verfahrensschritt (a) das mindestens eine katalytisch aktive Metall abgeschieden und der Träger mit mindestens einem Übergangsmetall und/oder einem weiteren katalytisch aktiven Metall vermengt. Anschließend wird die Temperaturbehandlung, Verfahrensschritt (c) durchgeführt.

Bei den Verbindungen, die das mindestens eine katalytisch aktive Metall bzw. das Übergangsmetall enthalten handelt es sich vorzugsweise um Komplexverbindungen, insbesondere um metallorganische Komplexverbindungen in denen das Metall der Platin-Gruppe bzw. der Übergangsmetalle komplexiert ist. Das Metall ist bevorzugt ausgewählt aus der Gruppe bestehend aus Platin, Titan, Eisen, Chrom, Ruthenium, Cobalt, Nickel und Palladium.

Bevorzugte Liganden zur Bildung der metallorganischen Komplexverbindung sind Olefine, vorzugsweise Dimethyloctadien, Aromaten, vorzugsweise Pyridin, 2,4-Pentandion. Weiterhin ist es auch bevorzugt, dass das mindestens eine Metall in Form eines gemischten Cyclopentadienyl-Carbonyl-Komplexes oder als reiner oder gemischter Carbonyl-, Phosphan-, Cyano- oder Isocyano-Komplex vorliegt.

Besonders bevorzugt ist es, wenn das Übergangsmetall als metallorganische Komplexverbindung mit Acetylacetonat oder 2,4-Pentandion als Ligand vorliegt. Das Übergangsmetall liegt dabei vorzugsweise ionisch vor.

Gemäß einer weiteren Ausführungsform der Erfindung liegt die mindestens eine Verbindung, die das mindestens eine katalytisch aktive Metall der Platingruppe enthält und/oder die mindestens eine Verbindung, die das mindestens eine Übergangsmetall enthält als thermisch zersetzbare Verbindung in trockenem Zustand vor. Alternativ ist es jedoch auch möglich, dass die thermisch zersetzbare(n) Verbindung(en) in einem Lösungsmittel gelöst ist bzw. sind. Das Lösungsmittel ist hierbei vorzugsweise ausgewählt aus der Gruppe bestehend aus Wasser, Ethanol, Hexan, Cyclohexan, Toluol und Etherverbindungen. Bevorzugte Etherverbindungen sind offenkettige Ether, zum Beispiel Diethylether, Di-n-propylether oder 2-Methoxypropan, sowie cyclische Ether wie Tetrahydrofuran oder 1,4-Dioxan.

Das Vermengen des Trägers mit der mindestens einen Verbindung, die das mindestens eine katalytisch aktive Metall aus der Platingruppe enthält, und gegebenenfalls mit der mindestens einen Verbindung, die das mindestens eine Übergangsmetall enthält, in Verfahrensschritt (a) erfolgt durch ein beliebiges, dem Fachmann bekanntes Verfahren zum Mischen von Feststoffen. Geeignete Feststoffmischer umfassen üblicherweise einen Behälter, in dem das zu mischende Material bewegt wird. Geeignete Feststoffmischer sind z.B. Schaufelmischer, Schraubenmischer, Silomischer oder pneumatische Mischer.

Wenn die Verbindung(en) in einem Lösungsmittel vorliegt bzw. vorliegen, wird das Vermengen mit Hilfe eines üblichen Dispergierverfahrens vorgenommen. Hierzu wird z.B. ein Behälter eingesetzt, in dem schnell rotierende Messer bzw. Klingen enthalten sind. Ein derartiges Gerät ist z.B. ein Ultra-Turrax®.

In Verfahrensschritt (b) wird mindestens eine hydrolysierbare Vorläuferverbindung des mindestens einen Metalloxids auf den Träger abgeschieden. Das Abscheiden geschieht bevorzugt durch Hydrolyse einer hydrolysierbaren Vorläuferverbindung des mindestens einen Metalloxids. Derartige hydrolysierbare Vorläuferverbindungen sind dem Fachmann bekannt. Die hydrolysierbare Vorläuferverbindung des mindestens einen Metalloxids ist dabei beispielsweise ein Alkoholat bzw. ein in Alkohol lösliches Metallsalz bzw. ein in Alkohol löslicher Komplex, die in Verbindung mit Wasser schwerlösliche Oxide oder Hydroxide bilden, die nach Zugabe von Wasser bzw. in Gegenwart von Wasser auf dem Träger ausfallen.

Das mindestens eine Metalloxid ist üblicherweise nicht mit dem Platin legiert. Die Größe der Metalloxidpartikel auf dem erfindungsgemäßen Katalysator kann über weite Bereiche variieren. Die Partikel sind allgemein kleiner als 8 nm, bevorzugt kleiner als 5 nm.

Um eine Legierung aus dem Metall der Platin-Gruppe und gegebenenfalls dem zweiten Metall, ausgewählt aus den Metallen der Platin-Gruppe oder den Übergangsmetallen, herzustellen, wird die durch das Vermengen in Verfahrensschritt (a) erhaltene Mischung erhitzt. Hierzu wird die in den Verfahrensschritten (a) und (b) erhaltene Mischung in einem Ofen auf eine Temperatur im Bereich von 90 bis 900 °C, bevorzugt im Bereich von 350 bis 900 °C, mehr bevorzugt im Bereich von 400 bis 800 °C und insbesondere im Bereich von 400 bis 700 °C gebracht. Durch das Erhitzen wird die mindestens eine Komplexverbindung zersetzt und das darin gebundene Metall freigesetzt. Das Metall verbindet sich im Falle der Legierungsbildung mit dem weiteren Metall der Platin-Gruppe bzw. dem Übergangsmetall. Es entsteht eine Legierung, bei der jeweils Metall-Kristallite ungeordnet nebeneinanderliegen. Die einzelnen Metall-Kristallite haben dabei im Allgemeinen eine Größe im Bereich von 2 bis 7 nm.

In einer bevorzugten Ausführungsform erfolgt die Temperaturbehandlung in zwei Temperaturstufen, wobei die Temperatur der ersten Temperaturstufe niedriger ist als die Temperatur der zweiten Temperaturstufe. Auch ist es möglich, dass das Erhitzen in mehr als zwei Temperaturstufen erfolgt. Üblicherweise ist dabei ist jeweils die Temperatur der nachfolgenden Temperaturstufe höher als die Temperatur der vorhergehenden Temperaturstufe. Bevorzugt ist es jedoch, dass das Erhitzen in zwei Temperaturstufen erfolgt.

Die Temperaturbehandlung im Schritt (c) kann sowohl diskontinuierlich, als auch kontinuierlich beispielsweise in einem Drehrohr erfolgen.

In einer bevorzugten Ausführung erfolgt die Temperaturbehandlung in Schritt (c) diskontinuierlich, wobei das in den Schritten (a) und (b) hergestellte Gemisch zunächst unter Inertgas beispielsweise unter Stickstoff- bzw. Argonatmosphäre auf eine Temperatur im Bereich von 100 bis 350°C, bevorzugt 200 bis 300°C über einen Zeitraum von 1 bis 10 h, bevorzugt 2 bis 5 h, üblicherweise 3 bis 4 h erwärmt wird. Danach wird das Gasgemisch auf eine reduzierende Atmosphäre umgestellt und die zweite Temperaturstufe eingestellt. Die Temperatur dieser zweiten Temperaturstufe beträgt allgemein 350 bis 800°C und bevorzugt 550 bis 650°C; die Verweilzeit liegt allgemein im Bereich von 1 bis 10 h, üblicherweise im Bereich von 2 bis 6 h, bevorzugt bei etwa 3 h. Danach wird der Ofen unter inerter Gasatmosphäre langsam auf Raumtemperatur abgekühlt, und der Katalysator passiviert.

In einer weiteren bevorzugten Ausführung erfolgt die Temperaturbehandlung im Schritt (c) kontinuierlich, wobei das in den Schritten (a) und (b) hergestellte Gemisch zunächst in einen Vorratsbehälter vor dem Ofen eingebaut und unter Inertgas, beispielsweise unter Stickstoff bzw. Argon gespült wird. Der kontinuierliche Ofen kann verschiedene Heizzonen besitzen, dabei ist bevorzugt, dass er mindestens zwei Heizzonen enthält.

Wenn das Erhitzen in Schritt (c) in zwei Temperaturstufen im kontinuierlichen Betrieb erfolgt, so ist es bevorzugt, wenn die Temperatur der ersten Temperaturstufe (Heizzone) im Bereich von 300 bis 500 °C, bevorzugt im Bereich von 350 bis 450 °C und insbesondere im Bereich von 400 bis 450 °C liegt, und die Temperatur der zweiten Temperaturstufe (Heizzone) im Bereich von 500 bis 700 °C, mehr bevorzugt im Bereich von 550 bis 650 °C und insbesondere im Bereich von 600 bis 650 °C. Die Temperatur der zweiten Temperaturstufe ist dabei vorzugsweise mindestens 100 °C, bevorzugt mindestens 150 °C, höher als die Temperatur der ersten Temperaturstufe.

Die Verweilzeit im kontinuierlichen Ofen in Schritt (c) liegt vorzugsweise im Bereich von 30 min bis 10 h, mehr bevorzugt im Bereich von 45 min bis 5 h und insbesondere im Bereich von 1 bis 2 h.

Das Erhitzen der Legierungsvorstufe in Schritt (c) erfolgt vorzugsweise unter einer reduzierenden Atmosphäre. Die reduzierende Atmosphäre enthält vorzugsweise Wasserstoff. Der Anteil des Wasserstoffs ist dabei abhängig von der Zusammensetzung des herzustellenden Katalysators. Der Anteil an Wasserstoff in der reduzierenden Atmosphäre kann dabei 2 bis 100 Vol.-% betragen. Bevorzugt wird eine Formiergasatmosphäre eingesetzt, wobei die Konzentration an Wasserstoff üblicherweise kleiner als 30 Vol.-%, im Allgemeinen kleiner als 20 Vol.-% ist. Besonders bevorzugt liegt der Anteil an Wasserstoff in der reduzierenden Atmosphäre im Bereich von 2 bis 15 Vol.-% und insbesondere bei ungefähr 5 Vol.-%. Insbesondere bei der Herstellung eines Pt-Ni-Katalysators, oder eines ternären Katalysators, der PtNi oder PtCo enthält, liegt der Anteil an Wasserstoff in der reduzierenden Atmosphäre, vorzugsweise im Bereich von 4 bis 10 Vol.-%, insbesondere bei ungefähr 5 Vol.-%.

Neben Wasserstoff enthält die reduzierende Atmosphäre vorzugsweise mindestens ein inertes Gas. Vorzugsweise enthält die reduzierende Atmosphäre Stickstoff. Alternativ ist es jedoch auch möglich, dass anstelle des Stickstoffs zum Beispiel Argon eingesetzt wird. Auch ist es möglich, eine Mischung aus Stickstoff und Argon zu verwenden. Bevorzugt ist jedoch Stickstoff.

Insbesondere ist es bevorzugt, wenn die reduzierende Atmosphäre neben dem Wasserstoff und dem inerten Gas keine weiteren Bestandteile enthält. Hierbei soll jedoch nicht ausgeschlossen werden, dass zum Beispiel aufgrund der Gasherstellung noch Spuren weiterer Gase enthalten sind.

Nach dem Erhitzen zur Bildung der Legierung in Schritt (c) wird vorzugsweise eine Passivierung durchgeführt. Hierzu wird die hergestellte Legierung zum Beispiel auf Umgebungstemperatur unter einer inerten Atmosphäre abkühlt. Die inerte Atmosphäre ist dabei vorzugsweise eine Stickstoffatmosphäre oder eine Argonatmosphäre. Auch ist es möglich, eine Mischung aus Stickstoff und Argon einzusetzen. Auch kann die in Schritt (c) hergestellte Legierung zur Passivierung zum Beispiel bei der kontinuierlichen Durchführung in eine Wasservorlage eingebracht werden.

Gemäß einer bevorzugten Ausführungsform ist der erfindungsgemäße Katalysator nach der Herstellung noch rieselfähig. Dafür ist es nicht zwingend, dass der Katalysator vollständig getrocknet ist. Ein Katalysator ist im Allgemeinen noch rieselfähig, wenn er eine Restfeuchte von bis zu 50 Gew.-% Wasser aufweist. Besonders bevorzugt liegt der Restfeuchtegehalt des erfindungsgemäßen Katalysators im Bereich von 10 bis 30 Gew.-% Wasser. Ein restfeuchter Katalysator wird zum Beispiel durch Lufttrocknen bei der Herstellung erhalten.

Der erfindungsgemäß hergestellte Katalysator eignet sich zum Beispiel zur Verwendung als Elektrodenmaterial in einer Brennstoffzelle. Geeignete Anwendungsbereiche sind dabei die Elektrooxidation von Sauerstoff. Auch für andere elektrochemische Verfahren, wie die Chloralkalielektrolyse ist der erfindungsgemäße Katalysator anwendbar. In einer besonders bevorzugten Ausführungsform wird der erfindungsgemäße Katalysator für eine Elektrode in einer Polymerelektrolyt-Brennstoffzelle (PEFC), auch Protonenaustauschmembran-Brennstoffzelle genannt, verwendet. Die Elektrode für die der Katalysator eingesetzt wird, ist insbesondere eine Kathode der Polymerelektrolyt-Brennstoffzelle. Bei der Verwendung als Kathode einer Polymerelektrolyt-Brennstoffzelle zeigt der erfindungsgemäße Katalysator eine überraschend hohe Aktivität bezüglich der Sauerstoffreduktionsreaktion.

In einer weiteren bevorzugten Ausführungsform wird der erfindungsgemäße Katalysator als Kathodenkatalysator in einer Hochtemperatur-Phosphorsäure-Brennstoffzelle verwendet.

Beispiele

Herstellungsbeispiele

Vergleichsbeispiel V1: Herstellung eines Platinkatalysators (~50 Gew-% Pt)

5 g Vulcan XC72 wurden in 500 ml Wasser suspendiert und 15 min. mit einem Ultra Turrax® T25 bei 8.000 U/min homogenisiert. 8,55 g $Pt(NO_3)_2$ wurden in 100 ml Wasser gelöst und zur Rußdispersion gegeben. Anschließend wurden 200 ml $H_2O$ und 800 ml Ethanol zugegeben. Die Mischung wurde unter Stickstoff 6 Stunden unter Rückfluss erhitzt. Der Katalysator wurde abfiltriert und mit 2,5 l heißem Wasser nitratfrei gewaschen.

Es wurden Katalysatoren mit einem Platingehalt von 47 Gew.-% und Kristallitgrößen (XRD) von 3,1 nm erhalten. Die elektrochemische Oberfläche (bestimmt durch CO-stripping) betrug 71,4 $m^2$/g Platin.

Vergleichsbeispiel V2: Herstellung eines Platinkatalysators (~30 Gew-% Pt)

5 g Vulcan XC72 wurden in 500 ml Wasser suspendiert und 15 min. mit einem Ultra Turrax® T25 bei 8.000 U/min homogenisiert. 3,66 g $Pt(NO_3)_2$ wurden in 100 ml Wasser gelöst und zur Rußdispersion gegeben. Anschließend wurden 200 ml $H_2O$ und 800 ml Ethanol zugegeben. Die Mischung wurde unter Stickstoff 6 Stunden unter Rückfluss erhitzt. Der Katalysator wurde abfiltriert und mit 3 l heißem Wasser nitratfrei gewaschen.

Es wurden Katalysatoren mit einem Platingehalt von 28,4 Gew.-% und Kristallitgrößen (XRD) von 1,9 nm erhalten. Die elektrochemische Oberfläche (bestimmt durch CO-stripping) betrug 136 $m^2$/g Platin.

Vergleichsbeispiel V3: Herstellung von $TiO_2$-dotierten (5-Gew.-%) Platinkatalysatoren

5 g Vulcan XC72 wurden in 500 ml Ethanol (absolut) suspendiert und 15 min. mit einem Ultra Turrax® T25 bei 8.000 U/min. homogenisiert. 3,56 g $Ti[OCH(CH_3)_2]_4$ wurden in 50 ml Ethanol gelöst und zur Rußdispersion gegeben, ebenso wie weitere 200 ml Ethanol. Insgesamt 800 ml wässrige Platinlösung (8,55 g $Pt(NO_3)_2$ wurden zur Rußdispersion gegeben und die Mischung unter Stickstoff 6 Stunden unter Rückfluss erhitzt. Der Katalysator wurde abfiltriert und mit 2,5 l heißem Wasser nitratfrei gewaschen.

Es wurden Katalysatoren mit einem Platingehalt von 41 Gew.-% und einem Titangehalt von 5,0 Gew.-% (entspricht 8,3 Gew.-% $TiO_2$) erhalten. Die mittels XRD bestimmte Kristallitgröße der Pt-Nanopartikel lag bei 2,6 nm. Die elektrochemische Oberfläche (bestimmt durch CO-stripping) betrug 62,9 $m^2$/g Platin.

Vergleichsbeispiel V4: Herstellung von Platinkatalysatoren mit einem $TiO_2$-Anteil von 33,5 Gew.-%.

2,5 g Vulcan XC72 wurden in 500 ml Wasser suspendiert und 15 min. mit einem Ultra Turrax® T25 bei 8.000 U/min homogenisiert. 8,55 g $Pt(NO_3)_2$ wurden in 100 ml Wasser gelöst und zur Rußdispersion gegeben. Anschließend wurde mit 200 ml Wasser gespült. 17,86 g $Ti[OCH(CH_3)_2]_4$ wurden in insgesamt 700 ml Ethanol gelöst und direkt in die Reaktionslösung (unter Rückfluss) langsam eindosiert. Die Mischung wurde unter Stickstoff über einen Zeitraum von 6 Stunden unter Rückfluss erhitzt. Der Katalysator wurde abfiltriert und mit 2,5 l heißem Wasser nitratfrei gewaschen.

Es wurden Katalysatoren mit einem Platingehalt von 38 Gew.-% und einem Titangehalt von 20,1 Gew.-% (entspricht 33,5 Gew.-% $TiO_2$) erhalten. Die mittels XRD bestimmten Kristallitgrößen der Pt-Nanopartikel lag bei 2,9 nm, die der $TiO_2$-Partikeln (Anatase) bei 5,0 nm. Die elektrochemische Oberfläche betrug 23 $m^2$/g Platin.

Vergleichsbeispiel V5: Herstellung eines Platinnickelkatalysators

23 g eines gemäß Vergleichsbeispielen 1 bzw. 2 hergestellten Pt-Katalysators (19,5 Gew-% Pt, 22 Gew-% $H_2O$; d.h. auf trockenen Katalysator gerechnet: 25 Gew-% Pt) wurden mit 8,9 g Nickel-Acetylacetonat trocken vermischt, in einen Drehrohrofen (HTM Reetz 700-110-500) eingebaut und 1 h unter Stickstoff gespült. Danach wurde das Katalysatorgemisch zunächst bei 110°C getrocknet (unter Stickstoff, 2 h). Für den Legierungsprozess wurde der Ofen auf 210°C geheizt (Aufheizzeit: 30 min) und mit 0,8 l/h $H_2$, 15 l/h $N_2$ auf reduzierende Atmosphäre umgestellt. Nach einer Haltezeit von 4 h bei 210°C, wurde die Temperatur auf 600°C erhöht (Aufheizzeit 3 h) und weitere 3 h gehalten (unter reduzierenden Bedingungen mit 0,8 l/h $H_2$, 15 l/h $N_2$). Anschließend wurde der Ofen wieder mit Stickstoff gespült und langsam auf Raumtemperatur abgekühlt.

Der Katalysator wurde passiviert und mit 2 l 0,5 M $H_2SO_4$ für 1 h bei 90°C erhitzt, um nicht einlegiertes Nickel zu entfernen. Zum Schluss wurde der Katalysator gefiltert, mit 3 l heißem Wasser gewaschen und getrocknet.

Der Katalysator hatte einen Platingehalt von 24,4 Gew.-% und einen Nickelanteil von 3,1 Gew.-%. Das entspricht einer stöchiometrischen Legierungszusammensetzung von $Pt_{2,8}Ni$. Die mittels XRD bestimmte Kristallitgröße der PtNi-Nanopartikel lag bei 2,7 nm.

Beispiel 1: Herstellung von $TiO_2$-dotierten (0,5 Gew.-%) Platinkatalysatoren

5 g Vulcan XC72 wurden in 500 ml Wasser suspendiert und 15 min. mit einem Ultraturrax T25 bei 10.000 U/min homogenisiert. Anschließend wurden 8,55 g $Pt(NO_3)_2$ in 100 ml Wasser gelöst und zu der homogenisierten Rußdispersion gegeben, ebenso wie weitere 200 ml Wasser. Daran anschließend wurden 0,36 g $Ti[OCH(CH_3)_2]_4$ in 800 ml Ethanol gelöst und per Fallrohr zur Rußdispersion gegeben. Die Reaktionsmischung wurde anschließend 6 Stunden unter Rückfluss gekocht. Der dabei entstandene Katalysator wurde abfiltriert und mit 2,5 l heißem Wasser nitratfrei gewaschen.

Es wurde ein Katalysator mit einem Platingehalt von 46 Gew.-% und einem Titangehalt von 0,58 Gew.-% (entspricht 0,97 wt% $TiO_2$) erhalten. Die mittels XRD bestimmte Kristallitgröße der Platinnanopartikel lag bei 3,1 nm. Die elektrochemisch Oberfläche (bestimmt durch CO-stripping) betrug 68,3 $m^2$/g Platin.

Beispiel 2: Herstellung von $TiO_2$-dotierten (0,5 Gew-%) Platinkatalysatoren

5 g Vulcan XC72 wurden in 500 ml Ethanol (absolut) suspendiert und 15 min. mit einem Ultraturrax T25 bei 10.000 U/min. homogenisiert. 0,36 g $Ti[OCH(CH_3)_2]_4$ in 50 ml Ethanol gelöst wurden zu dieser Rußsuspension gegeben, ebenso wie weitere 200 ml Ethanol. Insgesamt 800 ml wässrige Platinlösung (8,55 g $Pt(NO_3)_2$ wurden zur Rußdispersion gegeben und die Mischung unter Stickstoff 6 Stunden unter Rückfluss erhitzt. Der erhaltene Katalysator wurde abfiltriert und mit 2,5 l heißem Wasser nitratfrei gewaschen.

Es wurden Katalysatoren mit einem Platingehalt von 44 Gew.-% und einem Titangehalt von 0,59 Gew.-% (entspricht 0,98 Gew.-% $TiO_2$) erhalten. Die mittels XRD bestimmte Kristallitgröße der Platinnanopartikel lag bei 2,9 nm. Die elektrochemische Oberfläche (bestimmt durch CO-stripping) betrug 70,9 $m^2$/g Platin.

Im Vergleich zu Beispiel 1 ist ersichtlich, dass die elektrochemische Oberfläche des Platins bei gleichzeitiger Abscheidung von Metalloxid-Dotierung und Platin (Beispiel 2) höher ist. Insbesondere mit steigender Oxidbeladung verringert sich die Oberfläche sehr stark (siehe Vergleichsbeispiele V3 und V4), d.h. die für die Katalyse zur Verfügung stehende Platinfläche ist deutlich kleiner und die Aktivität des Katalysators entsprechend geringer.

Beispiel 3: Herstellung eines $ZrO_2$-dotierten (0,2 Gew%) PtNi-Katalysators

0,34 g $Zr[OC_4H_9]_4$ (80% in 1-Butanol, Aldrich) wurden in 450 ml Ethanol gelöst. 7 g Vulcan XC72 wurden zur Zr-lösung gegeben und 10 min. mit einem Ultra Turrax® T25 bei 8.000 U/min homogenisiert. 100 ml wässrige Platinlösung (5,18 g $Pt(NO_3)_2$, Heraeus) wurden zur Rußdispersion gegeben und nochmals mit einem Ultraturrax dispergiert. Die Mischung wurde dann in einen Reaktor mit 1,4 l Wasser überführt und unter Stickstoff 6 Stunden unter Rückfluss erhitzt. Nach dem Abkühlen auf Raumtemperatur, wurde der Katalysator abfiltriert und mit 3 l heißem Wasser nitratfrei gewaschen, sowie getrocknet.

Der Katalysator hatte einen Platingehalt von 28,4 Gew.-% und einem Zirkoniumgehalt von 0,64 Gew.-%. Die mittels XRD bestimmte Kristallitgröße der Pt-Nanopartikel lag bei 2,0 nm.

Für die Herstellung des $ZrO_2$-dotierten PtNi-Katalysators wurden 5 g des vorstehenden $ZrO_2$-dotierten Pt-Katalysators mit 2,53 g Nickel-Acetylacetonat trocken vermischt, in einen Drehrohrofen (HTM Reetz 700-110-500) eingebaut und 1h unter Stickstoff gespült. Danach wurde das Katalysatorgemisch zunächst bei 110°C getrocknet (unter Stickstoff, 2 h). Für den Legierungsprozess wurde der Ofen auf 210°C geheizt (Aufheizzeit: 30 min) und mit 0,8 l/h $H_2$, 15 l/h $N_2$ auf reduzierende Atmosphäre umgestellt. Nach einer Haltezeit von 4 h bei 210°C, wurde die Temperatur auf 600°C erhöht (Aufheizzeit 3 h) und weitere 3 h gehalten (unter reduzierenden Bedingungen mit 0,8 l/h $H_2$, 15 l/h $N_2$). Anschließend wurde der Ofen wieder mit Stickstoff gespült und langsam auf Raumtemperatur abgekühlt.

Der Katalysator wurde unter Stickstoff ausgebaut, mit etwa 150 ml Wasser befeuchtet und anschließend mit 550 ml 0,5 M $H_2SO_4$ für 1 h bei 90°C erhitzt, um nicht einlegiertes Nickel zu entfernen. Zum Schluss wurde der Katalysator gefiltert, mit 2,5 l heißem Wasser gewaschen und getrocknet.

Der Katalysator hatte einen Platingehalt von 26,9 Gew.-%, einen Nickelanteil von 2,7 Gew-% und einem Zirkoniumgehalt von 0,2 Gew.-%. Das entspricht einer stöchiometrischen Legierungszusammensetzung von $Pt_3Ni$. Die mittels XRD bestimmte Kristallitgröße der PtNi-Nanopartikel lag bei 2,7 nm.

**Charakterisierung**

Beispiel 4: Bestimmung der katalytischen Aktivität bezüglich der Sauerstoffreduktionsreaktion und Möglichkeit der Reduzierung der Platin-Beladung

Die Sauerstoffreduktionsreaktion (engl. oxygen reduction reaction, ORR) wird mittels Messung an einer rotierenden Scheibenelektrode (engl. rotating disk electrode, RDE) im sauerstoffgesättigten Elektrolyt (1 M $HClO_4$) bestimmt (Potentialbereich: 50-950 mV; Scangeschwindigkeit: 20 mV/s).

Dabei wurde die rotierende Elektrode für die Sauerstoffreduktionsreaktionsmessung mit einer Katalysatormenge von etwa 40 $\mu$g/$cm^2$ beschichtet. Entsprechend des Pt-Gehalts der jeweiligen Proben variiert die Pt-Beladung zwischen 8 und 20 $\mu$g Pt/$cm^2$. Als direkter Vergleich der Leistung kann man beispielsweise das Potential bei einer konstanten Stromdichte (-1 mA/$cm^2$) vergleichen (siehe Tabelle 1), wobei gilt: je höher die Spannung, desto aktiver der Katalysator, da die Überspannung für die Sauerstoffreduktionsreaktion entsprechend geringer ist.

Alternative kann man die Stromdichte bei einer bestimmten Spannung vergleichen. Da insbesondere der kinetische Strom im Potentialbereich zwischen etwa 800 und 1000 mV eine Aussage über die katalytische Aktivität zulässt (je steiler die Strom-Spannungskurve, desto geringer die kinetische Hemmung der Reaktion, umso besser der Katalysator), werden ORR-Aktivitäten üblicherweise bei 0,9 V, entsprechend der folgenden Formel ausgewertet, wobei $i_d$ der Grenzdiffusionsstrom und $i_{0,9V}$ der Strom bei 0,9 V ist. Um unterschiedliche Beladungen auszugleichen erfolgt ein Normierung entweder auf die vorhandene Pt-menge $m_{Pt}$, oder auf die vorhandene Pt-Oberfläche.

$$I_{0.9V} = \frac{i_d \cdot i_{0.9V}}{i_d - i_{0.9V}} \cdot \frac{1}{m_{Pt}}$$

Der Platinkatalysator gemäß Vergleichsbeispiel V 1 erreicht eine Stromdichte von -1 mA/cm$^2$ bei einer Spannung von 919 mV. Durch den Zusatz von 0,5% TiO$_2$ (Beispiel 2) beobachtet man eine Verschiebung um 9 mV. Dies entspricht einer Steigerung der massespezifischen Aktivität bei 0,9 V von 129 mA/mg Pt auf 185 mA/mg Pt (d.h. um mehr als 40%). Eine Erhöhung der Oxidkonzentration zeigt entweder kaum einen Effekt (5% TiO$_2$, Vergleichsbeispiel V3) dass der Katalysator oder die Aktivität wird sogar deutlich verschlechtert (20% TiO$_2$, Vergleichsbeispiel V4). Im letzteren Fall beobachtet man eine Verschiebung um 34 mV zu niedrigeren Potentialen bzw. eine Verringerung der massespezifischen Aktivität auf 58 mA/mg Pt, d.h. um mehr als 50%.

Die signifikante Verringerung der katalytischen Aktivität bei hohen Oxidbeladungen kann direkt mit der reduzierten elektrochemischen Platinoberfläche korreliert werden. So beträgt die mittels CO stripping bestimmte Platinoberfläche bei dem gemäß V3 hergestellten Katalysator (5 Gew% Ti als TiO$_2$) bereits nur noch 63 m$^2$/g Pt, d.h. mehr als 10% weniger als der reine Platinkatalysator. Mit steigender Oxidbeladung (z.B. gemäß V4, mit 20 Gew% Ti als TiO$_2$) sinkt die Platinoberfläche auf weniger als ein Drittel (23 m$^2$/g Pt im Vergleich zu 71 m$^2$/g Pt im Falle des undotierten Katalysators gemäß V1).

Bei Oxidbeladungen oberhalb 0,9 Gew-% (vgl. Tabelle 2, Beispiel mit 0,95 Gew% Ti als TiO$_2$) ist die aktivitätssteigernde Wirkung des Oxidzusatzes bereits nicht mehr zu erkennen (obwohl die elektrochemische Oberfläche nur um wenige Prozent, d.h. im Bereich der Messungenauigkeit, verringert ist). Die beobachtete Verschiebung der ORR Kurve um 1 mV (bei einer Stromdichte von -1 mA/mg Pt) liegt im Bereich der Messungenauigkeit (s. Tabelle 2). Die massespezifische Aktivität des metalloxiddotierten Katalysators war weniger als 10% höher als die des undotierten Katalysators, was im Hinblick auf die Messungenauigkeit der ORR Messung als nicht signifikant angesehen werden kann.

Es wurde festgestellt, dass im Allgemeinen Pt- und PtNi-Katalysatoren, die Metalloxidzusätze im Bereich oberhalb von 0,9 Gew-% bis etwa 5 Gew-% praktisch unveränderte massespezifische Aktivitäten im Vergleich zu den undotierten Katalysatoren aufweisen.

Im Stand der Technik wird außerdem beispielsweise eine thermische Nachbehandlung der Katalysatoren unter Inertatmosphäre beschrieben. Dazu wurde exemplarisch der gemäß V4 hergestellte Katalysator unter Stickstoff (2 h, 450°C) getempert. Dabei verschlechterte sich die katalytische Aktivität hinsichtlich der Sauerstoffreduktion sogar noch weiter (auf eine massespezifische Aktivität von 35 mA/mg Pt). Analoge Ergebnisse wurden auch für andere thermisch nachbehandelte Katalysatoren erhalten, dabei wurde sowohl die thermische Nachbehandlung in inerten Bedingungen (Stickstoff) als auch unter reduzierenden Bedingungen (z.B. 5% Wasserstoff in Stickstoff, d.h. Formiergas) untersucht.

Diese Ergebnisse zeigen, dass die im Stand der Technik genannten Herstellungsschritte teilweise stark negative Effekte auf die undotierten Katalysatoren haben. So reduziert eine hohe Oxid-Beladung die katalytisch aktive Oberfläche so stark, dass die Gesamtaktivität des Systems stark absinkt. Eine thermische Nachbehandlung bereits bei 450°C verringert die Aktivität weiter. Bei Temperaturbehandlungen bis zu 1000°C, wie in der Literatur beschrieben, kann man erwarten, dass der Katalysator praktisch komplett inaktiv wäre.

Der gemäß Vergleichsbeispiel V2 hergestellte Katalysator mit 28,4 Gew.% Pt zeigt bei gleicher Katalysatorbeladung (d.h. geringerer Platinbeladung) eine i. Vgl. zu V1 zu niedrigeren Potentialen verschobene ORR Kurve. Auf die Platinmenge bezogen, ist die massespezifische Aktivität mit 134 mA/mg Pt dem gemäß V1 hergestellten Katalysator sehr ähnlich.

Der Zusatz von 0,5 Gew% Ti (als TiO$_2$) führt zu einem Anstieg der massespezifischen Aktivität auf 256 mA/mg Pt (d.h. um über 90%). Obwohl nur 60% der Aktivmasse (Pt) im Vergleich zu V1 auf der Elektrode vorhanden sind, ist die Aktivität nicht nur ähnlich sondern sogar höher (s. Tabelle 1, 927 mV i.Vgl. zu 919 mV). Ähnliche Ergebnisse wurden für einen analog hergestellten Katalysator erhalten, der nur 20 Gew% Pt und 0,5 Gew.% Ti enthielt (Masseaktivität: 244 mA/mg Pt), der mit 40% der Aktivmasse im Vergleich zu V1 nur geringfügig zu niedrigeren Potentialen verschoben war (914 mV i.Vgl. zu 919 mV).

Aufgrund der höheren Stromdichte für die Sauerstoffreduktionsreaktion durch die Metalloxid-Dotierung kann man eine Verringerung des Platin-Gehaltes auf der Kathodenseite einer Brennstoffzelle ohne Leistungseinbußen erreichen.

Tabelle 1:

| Katalysator | Beladung (μg Kat/cm$^2$) | Pt-Beladung (μg Pt/cm$^2$) | Spannung bei -1 mA/cm$^2$ (mV) |
|---|---|---|---|
| V1 (47% Pt) | 41,5 | 19,5 | 919 |
| Beispiel 2 (44% Pt, 0,59% Ti als TiO$_2$) | 42,7 | 20,0 | 928 |

(fortgesetzt)

| Katalysator | Beladung ($\mu$g Kat/cm$^2$) | Pt-Beladung ($\mu$g Pt/cm$^2$) | Spannung bei -1 mA/cm$^2$ (mV) |
|---|---|---|---|
| V3 (41% Pt, 5% Ti als TiO$_2$) | 44,2 | 18,5 | 921 |
| V4 (38% Pt, 20% Ti als TiO$_2$) | 40,7 | 15,4 | 885 |
| V5 (38% Pt, 20% Ti als TiO$_2$, N$_2$ getempert) | 41,7 | 16,7 | 880 |
| 29,1% Pt, 0,46 % Ti als TiO$_2$ (analog Beispiel 2) | 39,4 | 11,5 | 927 |
| 18,5% Pt, 0,47% Ti als TiO$_2$ (analog Beispiel 2) | 43,7 | 8,1 | 914 |

Tabelle 2:

| Katalysator | Beladung ($\mu$g Kat/cm$^2$) | Pt-Beladung ($\mu$g Pt/cm$^2$) | Spannung bei -1 mA/cm$^2$ (mV) |
|---|---|---|---|
| V2 (28,4% Pt) | 60,2 | 17,1 | 921 |
| Analog V3 hergestellt: 27,7% Pt, 0,95% Ti als TiO$_2$ | 61,4 | 17,0 | 922 |

Beispiel 5: Bestimmung der katalytischen Aktivität von PtNi-Katalysatoren bezüglich der Sauerstoffreduktionsreaktion

Analog des Ausführungen in Beispiel 6, wurden ORR Aktivitäten von PtNi und Oxiddotierten PtNi Katalysatoren bestimmt. Vom Stand der Technik ist bekannt, dass Legierungen üblicherweise hohe Stromdichten für die Sauerstoffreduktionsreaktion aufweisen. Der gemäß Vergleichsbeispiel V4 hergestellte PtNi Katalysator weist eine im Vergleich zu reinen Platinkatalysatoren (z.B. V1 oder V2) etwa 2,2-fache massespezifische Aktivität auf. Durch eine Metalloxid-Dotierung (z.B. mit ZrO$_2$, gemäß Beispiel 4) kann diese nochmals um über 75% gesteigert werden.

Die beiden hergestellten PtNi Katalysatoren haben ein vergleichbares Pt-zu-Ni-Verhältnis von 75 at.-% Pt : 25 at% Ni (Stöchiometrie Pt$_3$Ni), so dass Aktivitätsunterschiede einzig auf die Metalloxid-Dotierung zurückzuführen sind.

Tabelle 3:

| Katalysator | Massenspezifische Aktivität bei 0,9 V (mA/mg Pt) |
|---|---|
| V4 (25% PtNi) | 284 |
| Beispiel 4 (27% PtNi, 0,2% Zr als ZrO2) | 500 |

Beispiel 6: Ex-situ Korrosionstest: Bestimmung der katalytischen Aktivität nach Belastungstest durch Potentialzyklen

Die Stabilität des Katalysatorsystems wurde durch Vergleich der ORR Aktivitäten vor und nach Potentialzyklen (200x zwischen 0.5 und 1.3 V) abgeschätzt. Durch schnelles Zyklisieren wird sowohl die Stabilität der Pt-Kristallite (niedriger Potentialbereich) als die des Trägers (Potentiale>1 V) simuliert.

Die ORR Aktivität des reinen Pt-Katalysators (47 Gew.-%) nimmt nach diesen Potentialzyklen mindestens um die Hälfte ab (-50%). Mit steigendem TiO$_2$-Gehalt nimmt die Korrosionsbeständigkeit ab; bei etwa 20 Gew.-% TiO$_2$, gehen fast 75% der Ursprungsaktivität verloren. Dies ist insofern überraschend als das die das TiO$_2$ an sich nicht korrodieren sollte und somit eine Destabilisierung der Pt-Partikel zu vermuten ist. Außerdem ist im Stand der Technik die Verwendung von Oxiden zur Erhöhung der Korrosionsstabilität beschrieben. Durch thermische Nachbehandlung, insbesondere unter Stickstoff, aber auch unter reduzierenden Bedingungen, kann die Korrosionsbeständigkeit der Katalysatoren erhöht werden, allerdings wird die Stabilität der unbehandelten TiO$_2$-freien Katalysatoren nicht erreicht. Außerdem geht diese geringfügige Erhöhung der Stabilität aber wie o.g. mit einer signifikanten Verringerung der Aktivität einher.

Bei erfindungsgemäßen Metalloxid-Dotierungen bis etwa 1 Gew.-% ist die Korrosionsstabilität vergleichbar mit den oxidfreien Katalysatoren, die Erhöhung der massenspezifischen Aktivität aber sehr groß, was insgesamt zu einer Verbesserung der Katalysatoren führt.

Bei Oxid-Zusätzen von mehr als 1 Gew.-% $TiO_2$ und insbesondere von mehr als 5 Gew-% weisen die Katalysatoren nicht nur eine verringerte katalytische Aktivität sondern auch eine deutlich reduzierte Korrosionsbeständigkeit im Vergleich zu oxidfreien Katalysatoren bzw. Katalysatoren mit Metalloxid-Dotierungen von weniger als 0,9 Gew-% auf. Diese Erkenntnisse sind gegensätzlich zu den Lehren des Stands der Technik.

Beispiel 7: In-situ Charakterisierung

Die Steigerung der katalytischen Aktivität wurde abschließend auch durch Messungen in Brennstoffzellen-Konfiguration bewertet. Im Speziellen haben wir einen erfindungsgemäßen Katalysator (gemäß Beispiel 1, 30 Gew.-% Pt, 0,5 Gew.-% Ti als $TiO_2$) auf der Kathodenseite einer Hoch-Temperatur-Phosphorsäure-Brennstoffzelle verwendet. Als Anode wurde ein konventioneller 30 Gew.-% Pt Katalysator verwendet, der auch als Referenz auf der Kathode benutzt wurde (z.B. gemäß Vergleichsbeispiel V2). Die Messbedingungen waren 160°C, Wasserstoff auf der Anode und Luft auf der Kathode. Wie der nachfolgenden Tabelle entnommen werden kann, ist eine Aktivitätssteigerung auch in-situ nachzuweisen.

Neben Hoch-Temperatur-Anwendungen, kann der erfindungsgemäße Katalysator natürlich auch in anderen Brennstoffzellen-Typen verwendet werden, z.B. Niedertemperatur-Nafion-basierte PEMFC, DMFC etc.

| Katalysator | Beladung | Leistung bei 0,2 A/cm$^2$ |
|---|---|---|
| 30%Pt/XC72 (Vergleichsbeispiel V2) | 1,1 mgPt/cm$^2$ | 128$\pm$0,5 mW/cm$^2$ |
| 30%Pt, 0,5%Ti/XC72 (Beispiel 2) | 1,1 mg Pt/cm$^2$ | 131$\pm$0,5 mW/cm$^2$ |

**Patentansprüche**

1. Katalysator zur Verwendung als Kathodenkatalysator einer Polymerelektrolyt-Brennstoffzelle oder Hochtemperatur-Phosphorsäure-Brennstoffzelle, enthaltend

   (A) einen Träger,
   (B) mindestens ein katalytisch aktives Metall ausgewählt aus der Gruppe bestehend aus Rhodium, Iridium, Nickel, Palladium, Platin, Kupfer, Silber und Gold oder eine Legierung enthaltend mindestens ein Metall ausgewählt aus der Gruppe bestehend aus Rhodium, Iridium, Nickel, Palladium, Platin, Kupfer, Silber und Gold, sowie
   (C) mindestens ein Oxid ausgewählt aus $TiO_2$ und $ZrO_2$,

   **dadurch gekennzeichnet, dass** der Anteil des mindestens einen Metalls des mindestens einen Metalloxids (C), bezogen auf die Summe der Gew%.-% der Komponenten (A), (B) und (C) im Bereich von 0,01 bis 0,9 Gew.-% liegt, dass der Anteil des katalytisch aktiven Metalls, bezogen auf die Summe der Gewichtsprozente der Komponenten (A), (B) und (C) im Bereich von 10 bis 50 Gew.-% liegt und dass der Anteil des Trägers, bezogen auf die Summe der Gewichtsprozente der Komponenten (A), (B) und (C) im Bereich von 49,1 bis 89,99 Gew.-% liegt.

2. Katalysator nach Anspruch 1, **dadurch gekennzeichnet, dass** der Träger ausgewählt ist aus einem Kohlenstoffträger, einem Polymer und einer Keramik,

3. Katalysator nach Anspruch 1 oder 2, **dadurch gekennzeichnet, dass** die Legierung des mindestens einen katalytisch aktiven Metalls (B) ausgewählt ist aus der Gruppe PtNi, PtFe, PtV, PtCr, PtTi, PtCu, PtPd, PtRu, PdNi, PdFe, PdCr, PdTi, PdCu und PdRu.

4. Verfahren zur Herstellung eines Katalysators, wie in einem der Ansprüche 1 bis 3 definiert, umfassend die Schritte

   (a) Abscheidung des mindestens einem katalytisch aktiven Metalls ausgewählt aus der Gruppe bestehend aus Rhodium, Iridium, Nickel, Palladium, Platin, Kupfer, Silber und Gold oder einer Legierung enthaltend mindestens ein Metall ausgewählt aus der Gruppe bestehend aus Rhodium, Iridium, Nickel, Palladium, Platin, Kupfer, Silber und Gold auf dem Träger, und
   (b) Abscheidung der mindestens einen hydrolysierbaren Vorläuferverbindung des mindestens einen Metalloxides auf dem Träger, und

(c) Durchführung einer Temperaturbehandlung bei einer Temperatur im Bereich von 90 bis 900°C,

wobei die Verfahrensschritte (a) und (b) nacheinander oder parallel durchgeführt werden, wobei Verfahrensschritt (b) auch vor Verfahrensschritt (a) durchgeführt werden kann, **dadurch gekennzeichnet, dass** Verfahrensschritt (c) in mindestens zwei Schritten bei unterschiedlichen Temperaturen durchgeführt wird, wobei die Temperatur von Schritt zu Schritt erhöht wird.

5. Verfahren nach Anspruch 4, wobei nach Verfahrensschritt (a) der Träger, auf dem der das mindestens eine katalytisch aktive Metall abgeschieden ist, mit mit mindestens einem weiteren katalytisch aktiven Metall und/oder mindestens einem Obergangsmetall vermengt wird und anschließend die Verfahrensschritte (b) und (c) in beliebiger Reihenfolge durchgeführt werden.

6. Verfahren nach Anspruch 4 oder 5, **dadurch gekennzeichnet, dass** die mindestens eine Verbindung, die das mindestens eine katalytisch aktive Metall aus der Platingruppe enthält $Pt(NO_3)_2$ ist.

7. Verfahren nach einem der Ansprüche 4 bis 6, **dadurch gekennzeichnet, dass** das Erhitzen in Schritt (c) unter einer reduzierenden Atmosphäre erfolgt.

8. Verfahren nach einem der Ansprüche 4 bis 7, **dadurch gekennzeichnet, dass** die reduzierende Atmosphäre Wasserstoff enthält.

**Claims**

1. A catalyst for use as cathode catalyst of a polymer electrolyte fuel cell or high-temperature phosphoric acid fuel cell, comprising

   (A) a support,
   (B) at least one catalytically active metal selected from the group consisting of rhodium, iridium, nickel, palladium, platinum, copper, silver and gold or an alloy comprising at least one metal selected from the group consisting of rhodium, iridium, nickel, palladium, platinum, copper, silver and gold and also
   (C) at least one oxide selected from among $TiO_2$ and $ZrO_2$

   wherein the proportion of the at least one metal of the at least one metal oxide (C), based on the sum of the percentages by weight of the components (A), (B) and (C), is in the range from 0.01 to 0.9% by weight, the proportion of the catalytically active metal, based on the sum of the percentages by weight of the components (A), (B) and (C), is in the range from 10 to 50% by weight, and the proportion of the support, based on the sum of the percentages by weight of the components (A), (B) and (C), is in the range from 49.1 to 89.99% by weight.

2. The catalyst according to claim 1, wherein the support is selected from among a carbon support, a polymer and a ceramic.

3. The catalyst according to claim 1 or 2, wherein the alloy of the at least one catalytically active metal (B) is selected from the group consisting of PtNi, PtFe, PtV, PtCr, PtTi, PtCu, PtPd, PtRu, PdNi, PdFe, PdCr, PdTi, PdCu and PdRu.

4. A process for producing a catalyst as defined in any of claims 1 to 3, which comprises the steps

   (a) deposition of the at least one catalytically active metal selected from the group consisting of rhodium, iridium, nickel, palladium, platinum, copper, silver and gold or an alloy comprising at least one metal selected from the group consisting of rhodium, iridium, nickel, palladium, platinum, copper, silver and gold on the support and
   (b) deposition of the at least one hydrolyzable precursor compound of the at least one metal oxide on the support and
   (c) carrying out of a heat treatment at a temperature in the range from 90 to 900°C,

   with process steps (a) and (b) being carried out in succession or in parallel, with process step (b) also being able to be carried out before process step (a), wherein process step (c) is carried out in at least two steps at different temperatures, with the temperature being increased from step to step.

**5.** The process according to claim 4, wherein, after process step (a), the support onto which the at least one catalytically active metal has been deposited is mixed with at least one further catalytically active metal and/or at least one transition metal and the process steps (b) and (c) are subsequently carried out in any order.

**6.** The process according to claim 4 or 5, wherein the at least one compound comprising the at least one catalytically active metal from the platinum group is $Pt(NO_3)_2$.

**7.** The process according to any of claims 4 to 6, wherein the heating in step (c) is carried out under a reducing atmosphere.

**8.** The process according to any of claims 4 to 7, wherein the reducing atmosphere comprises hydrogen.

**Revendications**

**1.** Catalyseur destiné à une utilisation en tant que catalyseur de cathode d'une pile à combustible électrolyte polymère ou d'une pile à combustible à l'acide phosphorique haute température, contenant

    (A) un support,
    (B) au moins un métal catalytiquement actif choisi dans le groupe constitué par le rhodium, l'iridium, le nickel, le palladium, le platine, le cuivre, l'argent et l'or ou un alliage contenant au moins un métal choisi dans le groupe constitué par le rhodium, l'iridium, le nickel, le palladium, le platine, le cuivre, l'argent et l'or, ainsi que
    (C) au moins un oxyde choisi parmi $TiO_2$ et $ZrO_2$,

**caractérisé en ce que** la proportion dudit au moins un métal dudit au moins un oxyde métallique (C), par rapport à la somme des % en poids des composants (A), (B) et (C) se situe dans la plage allant de 0,01 à 0,9 % en poids, **en ce que** la proportion du métal catalytiquement actif, par rapport à la somme des pourcentages en poids des composants (A), (B) et (C) se situe dans la plage allant de 10 à 50 % en poids, et **en ce que** la proportion du support, par rapport à la somme des pourcentages en poids des composants (A), (B) et (C) se situe dans la plage allant de 49, 1 à 89,99 % en poids.

**2.** Catalyseur selon la revendication 1, **caractérisé en ce que** le support est choisi parmi un support carboné, un polymère et une céramique.

**3.** Catalyseur selon la revendication 1 ou 2, **caractérisé en ce que** l'alliage dudit au moins un métal catalytiquement actif (B) est choisi dans le groupe constitué par PtNi, PtFe, PtV, PtCr, PtTi, PtCu, PtPd, PtRu, PdNi, PdFe, PdCr, PdTi, PdCu et PdRu.

**4.** Procédé de fabrication d'un catalyseur, tel que défini dans l'une quelconque des revendications 1 à 3, comprenant les étapes suivantes :

    (a) le dépôt dudit au moins un métal catalytiquement actif choisi dans le groupe constitué par le rhodium, l'iridium, le nickel, le palladium, le platine, le cuivre, l'argent et l'or ou un alliage contenant au moins un métal choisi dans le groupe constitué par le rhodium, l'iridium, le nickel, le palladium, le platine, le cuivre, l'argent et l'or sur le support, et
    (b) le dépôt dudit au moins un composé précurseur hydrolysable dudit au moins un oxyde métallique sur le support, et
    (c) la réalisation d'un traitement thermique à une température dans la plage allant de 90 à 900 °C,

les étapes de procédé (a) et (b) étant réalisées l'une après l'autre ou en parallèle, l'étape de procédé (b) pouvant également être réalisée avant l'étape de procédé (a), **caractérisé en ce que** l'étape de procédé (c) est réalisée en au moins deux étapes à différentes températures, la température étant augmentée d'étape en étape.

**5.** Procédé selon la revendication 4, dans lequel, après l'étape de procédé (a), le support sur lequel ledit au moins un métal catalytiquement actif est déposé est mélangé avec au moins un autre métal catalytiquement actif et/ou au moins un métal de transition, puis les étapes de procédé (b) et (c) sont réalisées dans un ordre quelconque.

**6.** Procédé selon la revendication 4 ou 5, **caractérisé en ce que** ledit au moins un composé qui contient ledit au moins un métal catalytiquement actif du groupe du platine est Pt(NO$_3$)$_2$.

7. Procédé selon l'une quelconque des revendications 4 à 6, **caractérisé en ce que** le chauffage à l'étape (c) a lieu sous une atmosphère réductrice.

8. Procédé selon l'une quelconque des revendications 4 à 7, **caractérisé en ce que** l'atmosphère réductrice contient de l'hydrogène.

# EP 2 481 113 B1

**IN DER BESCHREIBUNG AUFGEFÜHRTE DOKUMENTE**

**In der Beschreibung aufgeführte Patentdokumente**

- US 20060257719 A1
- US 20050112451 A1
- US 2009081528 A1
- US 2008254974 A1